Europäisches Patentamt

**European Patent Office**

Office européen des brevets

(19)

(11) Publication number: **0 345 492 B1**

## EUROPEAN PATENT SPECIFICATION

(12)

(45) Date of publication of patent specification: **06.10.93**    (51) Int. Cl.5: **C09J 7/02**

(21) Application number: **89108743.9**

(22) Date of filing: **16.05.89**

Consolidated with 89906112.1/0432159
(European application No./publication No.) by
decision dated 14.10.91.

The file contains technical information submitted
after the application was filed and not included in
this specification

(54) **Unrolling low-noise self-adhesive tape and process for the preparation thereof.**

(30) Priority: **09.06.88 IT 2091288**

(43) Date of publication of application:
**13.12.89 Bulletin 89/50**

(45) Publication of the grant of the patent:
**06.10.93 Bulletin 93/40**

(84) Designated Contracting States:
**CH DE ES FR GB LI NL SE**

(56) References cited:
**DE-A- 1 936 525**
**DE-A- 1 937 222**
**GB-A- 975 903**
**US-A- 3 241 662**

(73) Proprietor: **MINNESOTA MINING AND MANU-
FACTURING COMPANY**
**3M Center**
**Saint Paul Minnesota 55144-1000(US)**

(72) Inventor: **Pellegrini, Giuseppe**
**Via Osma, 2**
**I-20151 Milan(IT)**

(74) Representative: **Checcacci, Giorgio et al**
**PORTA, CHECCACCI & BOTTI s.r.l.,**
**Viale Sabotino, 19/2**
**I-20135 Milano (IT)**

## Description

The present invention refers to a self-adhesive tape in particular comprising a bistretched extruded polypropylene support and to the process for the preparation thereof. The support is provided with a main side and a back side, the main side supports an adhesive substance layer with an interposed anchoring layer. The adhesive substance layer comprises an adhesive mass coated in form of a solution in organic solvents.

Adhesive tapes of this kind are known. For instance French patent application S.N. 79 19719 and German patent application S.N. 2,239,665 describe self-adhesive tapes wherein the support consists of polypropylene.

In practice, such known polypropylene tapes however proved to have a high noise while being unrolled, in particular under quick unrolling, such as to cause serious problems of acoustic environmental pollution, both in the spool cutting step to obtain various width and length rolls, and in the use of the self-adhesive tape during its final employment, e.g. to close corrugated board boxes by means of applying machines. In fact, the noise caused while unrolling the adhesive tape is so high to he physically dangerous for the operators.

European patent application S.N. 0096841 describes a polypropylene self-adhesive tape having a relatively low unrolling noise, which makes use of a suitable releasing layer coated on the back side of the tape and formed generally from polyvinyl-carbamate, polyvinyl-benenate, polyvinyl-stearylisocyanate aromatic organic solvent solutions. Such releasing layer involves complicated problems both for the cost of the releasing product itself, and the complexity of the applying machine which shall in any case comprise at least one additional applying head and a solvent drying stove.

Moreover, the result is dubious, since small changes in the applying process may annul or reduce the releasing effect.

The adhesive substance used in such known tapes in some cases contains a cross linking agent in a quantity lower than 0.24% by weight. By increasing such quantities of cross linking agent, the adhesive substance proved to have a low sticking power on rough surfaces, such as the corrugated board of packaging boxes, with a consequent poor seal and opening or the boxes. In such case, furthermore, the tape results to be particularly sensitive to ageing and presents unrolling problems, above all at low temperatures, with frequent breakings of the tape itself while being applied.

It is therefore an object of the present invention to avoid the above said drawbacks by realizing an extruded, bistretched polypropylene self-adhesive tape which allows a particularly low unrolling noise to be obtained and to be prepared with simple and conventional applying machines.

It is a further object of the invention to maintain a good sticking capability on a corrugated board, even after ageing of the tape and at low temperatures.

This and other objects are achieved with the tape of the present invention, which comprises an extruded bistretched propylene polymer support, having a main side and a back side, an anchoring layer provided on the main side of the support, an adhesive layer provided on the anchoring layer, characterized in that the back side does not comprise a releasing layer and has a critical surface tension equal to the original extrusion values and in that a cross linking agent in a quantity from 0.5 to 2.5% by weight is comprised in the anchoring layer.

Preferably, such self-adhesive tape comprises the cross linking agent in a quantity In the range from 1 to 1.5% by weight. Such cross linking agent may comprise e.g. a diisocyan product, preferably a methyldiphenylisocyanate compound.

Preferably, the adhesive tape support has a thickness in the range from 30 to 50 micrometers. Such a support furthermore has a lenghtwise and crosswise stretching ratio in the range from 0.6 to 1.0. It has furthermore a lengthwise and crosswise tensile stress ratio in the range from 1.2 to 1.8. On the side which shall support the adhesive substance layer, such a support is furthermore subjected to a preferably flame-process such as to raise the critical surface tension to a value not lower than 38 dine/cm.

According to the invention, the cross linking agent is dispersed in the anchoring layer such that the anchoring layer is used as a vehicle for the cross linking agent and allows its migration in the adhesive substance layer. Such an embodiment is preferred since it allows to avoid a pre-linking step of the adhesive substance prior to being coated onto the tape, which step should give rise to stoppages of the applying machines due to the formation of cross linked thick-material.

Preferably, the adhesive substance layer has a adhesiveness (Peel Adhesion) in the range from 120 to 180 g/cm and preferably from 140 to 160 g/cm. Such adhesiveness is measured according to the PSTC 1 test method.

Preferably the self-adhesive tape according to the invention has an adhesive substance layer which has a Stickiness/wettability value (tack) in the range from 0 to 3 cm. Such a Stickiness/wettability value (tack) is measured according to the PSTC 6 test method.

Moreover, the adhesive tape has a tangent slipping resistance (Holding power or Shear adhesion) higher than 180 min., according to the PSTC 7 test method.

The adhesive substance layer of the self-adhesive tape of the invention comprises at least a gum in a quantity from 49 to 70% and a tackifier resin in a quantity from 30 to 41% with respect to the total dry adhesive substance weight.

The gum can be a natural gum and have preferably a constant viscosity in the range from 50 to 60° mooney, and the tackifier resin can be a hydrocarbon resin and have e.g. a melting point of 100°C The natural gum is preferably contained in a quantity from 40 to 70% with respect to the total dry adhesive substance weight and the tackifier hydrocarbon resin is preferably contained in a quantity from 20 to 40% by weight.

Furthermore, the adhesive substance layer can comprise a polyisoprene synthetic gum in a quantity from 10 to 14% with respect to the dry adhesive substance weight.

The adhesive substance layer furthermore comprises preferably a colophonic tackifier resin having e.g. a melting point of 100°C, preferably in a quantity from 5 to 11% by weight.

The adhesive substance layer furthermore comprises preferably a polyterpene tackifier resin ,having e.g. a melting point of 110°C in a quantity from 5 to 9 % with respect to the total dry adhesive substance weight.

The adhesive substance layer furthermore comprises preferably a naphthene mineral oil in a quantity from 2 to 9% with respect to the total dry adhesive substance weight.

The adhesive substance layer furthermore comprises preferably an alkylbenzene synthetic oil in a quantity from 2 to 10% by weight.

Additives, e.g. antioxidants, ballasts or pigments may be furthermore added thereto.

All components of the adhesive substance layer are preferably dissolved and/or dispersed in an organic solvent in a quantity from 25 to 35% by weight with respect to the wet total weight. The solution/suspension in an organic solvent of the above mentioned adhesive agents is then spread on the support, preferably after having properly treated the support itself to increase the surface tension thereof and having spread a cross linking agent-containing anchoring layer. The organic solvent is then evaporated. The back side of the support does not undergo any treatment to increase the critical surface tension.

Further characteristics and advantages of the present invention will better result from the description of some preferred realization forms of the self-adhesive tape which are reported as mere indicative and non-limiting examples, wherein examples 1-9 refer to a self-adhesive tape according to the present invention and examples 10-13 are comparison examples which are not a part of the present invention.

Examples 1-6 in particular describe some compositions of the adhesive substance layer according to the invention to which the cross linking agent has not yet been added. Such examples 1-6 are outlined in the following Table 1.

TABLE 1

| EXAMPLE | NR | IR | HR | GR | TR | MO | ABO |
|---------|-----|-----|-----|-----|-----|-----|-----|
| 1 | 69 | 0 | 26 | 0 | 5 | 0 | 0 |
| 2 | 56 | 14 | 20 | 10 | 0 | 0 | 0 |
| 3 | 58 | 0 | 40 | 0 | 0 | 2 | 0 |
| 4 | 47 | 11 | 35 | 5 | 0 | 0 | 2 |
| 5 | 49 | 0 | 32 | 0 | 9 | 0 | 10 |
| 6 | 40 | 10 | 25 | 11 | 5 | 9 | 0 |

wherein:

NR = constant viscosity natural gum;
IR = polyisoprene synthetic gum;
HR = hydrocarbon tackifier resin;
GR = colophonic tackifier resin;
TR = polyterpene tackifier resin;
MO = naphthene mineral oil;
ABO = alkyl-benzene synthetic oil.

3

Making reference to examples from 1 to 6, a good sticking capability on corrugated board and a good unrolling capability even at low temperatures are obtained in all examples from 1 to 6 by using an anchoring layer containing 1% of the cross linking agent formed e.g. from diisocyanate. Noise is also very low, lower than that of the so-called "no-noise" BOPP tapes which can be found at present on the market.

With reference to examples 7-9, the adhesiveness values have been evaluated according to PSTC 1 standards, the tack values according to PSPC 6 standards, the shear adhesion values according to PSTC 7 Kg 1 standards and noise in function of different quantities of cross linking agent contained in the adhesive substance layer. As regards the above mentioned parameters, the samples have been measured twice, i.e. after 72 hours from manufacture and after an accelerated ageing process.

The accelerated ageing process is made in the following way: the sample is conditioned for 72 hours in a climatic chamber at 60°C and 50% R.H. As shown by comparison tests, such conditioning practically corresponds to a natural ageing of about 12 months.

As regards the noise measures, a microphone is placed at a distance of one meter from the reflecting plane of the tape-unrolling machine, on the same plane of the unrolling axis of the roll under examination. The decibel value reported in the tables represents the average of the values taken in 15 sec. Ground noise has also been measured, under the same test conditions, with the unrolling machine under working status but without unrolling the adhesive tape. In particular, when the machine works at a speed of 52 m/min, a ground noise of 65 dB is obtained and when the spool moves at a speed of 103 m/min a ground noise of 68.6 dB is obtained.

Examples 7-9 are shown in the following table 2.

## TABLE 2

| Example | 7 | 8 | 9 |
|---|---|---|---|
| - Releasing layer | no | no | no |
| - cross linking agent percentage on dry adhesive substance layer | 0.5 | 1 | 2.5 |
| - Adhesiveness (without ageing) g/cm | 146 | 158 | 162 |
| - Adhesiveness (after ageing) g/cm | 170 | 162 | 150 |
| - Tack (without ageing) cm | 0.5 | 0.5 | 0.5 |
| - Tack (after ageing) cm | 1.0 | 1.5 | 2.5 |
| - Shear adhesion (without ageing) minutes | 120 | 180 | 180 |
| - Shear adhesion (after ageing) minutes | 180 | 150 | 100 |
| Unrolling Noise | | | |
| Speed 52 m/min at 22°C dB | 72.9 | 72.4 | 72.2 |
| Speed 103 m/min at 22°C dB | 80.2 | 78.0 | 79.6 |
| Speed 52 m/min at 16°C dB | 72.1 | 74.5 | 86.8 |
| Speed 103 m/min at 16°C dB | 88.6 | 81.0 | 93.4 |

With reference to comparison examples 10-13, example 10 regards a PVC tape to which a releasing layer has not been applied, example 11 regards a PVC tape to which a releasing layer has been applied, example 12 regards a bistretched polypropylene tape with a releasing layer and example 13 regards a so-called "no-noise" bistretched polypropylene tape which can be found on the market. Samples of the tapes described in such examples have been submitted to unrolling noise tests in the same way as that described in the previous examples. The results are reported in the following Table 3.

TABLE 3

| Example | 10 | 11 | 12 | 13 |
|---|---|---|---|---|
| Support | PVC | PVC | BOPP | BOPP |
| Releasing layer | no | yes | yes | yes |
| **Unrolling Noise** | | | | |
| Speed 52 m/min at 22°C dB | 74.1 | 89.0 | 88.9 | 74.2 |
| Speed 103 m/min at 22°C dB | 80.8 | 92.7 | 93.2 | 81.6 |
| Speed 52 m/min at 16°C dB | 73.3 | 88.9 | 89.1 | 93.3 |
| Speed 103 m/min at 16°C dB | 80.9 | 91.9 | 93.6 | 96.0 |

The self-adhesive tape of the present invention in practice has been found to be capable of giving particularly low noise levels. Furthermore, in all examples of the invention the tape has good characteristics of adhesion on corrugated board and does not cause unrolling or breaking problems even at low temperatures.

**Claims**

1. A self adhesive tape comprising an extruded bistreched propylene polymer support having a thickness in the range of from 30 to 50 μm and a main side and a back side, a natural and/or modified gum anchoring layer provided on the main side of the support, an adhesive layer provided on the anchoring layer, characterized in that the back side does not comprise a releasing agent and has a critical surface tension equal to the original extrusion value the anchoring layer comprises a dillsocyanate cross linking agent in a quantity of from 0.5 to 2.5% by weight, and the adhesive layer comprises an adhesive mixture of at least a gum in a quantity of from 49 to 70% and at least a tackifier resin in a quantity of from 30 to 41% by weight with respect to the total dry adhesive substance weight.

2. The self adhesive tape of claim 1, characterized in that said anchoring layer comprises said cross linking agent in a quantity of from 1 to 1.5% by weight.

3. The self adhesive tape of claim 1, characterized in that said cross linking agent is methyldiphenylisocyanate.

4. The self adhesive tape of claim 1, characterized in that said support has a lengthwise and crosswise stretching ratio in the range of from 0.6 to 1.0.

5. The self adhesive tape of claim 1, characterized in that said support has a lengthwise and crosswise tensile stress ratio in the range of from 1.2 to 1.8.

6. The self adhesive tape of claim 1, characterized in that said main side has a critical surface tension value higher than 38 dine/cm.

7. The self adhesive tape of claim 1, characterized in that said gum comprises natural and/or polyisoprene synthetic gum.

8. The self adhesive tape of claim 7 characterized in that said natural gum has a constant viscosity in the range of from 50° to 60° mooney and is contained in said adhesive layer in a quantity of from 40 to 70% by weight.

9. The self adhesive tape of claim 7, characterized in that said polyisoprene synthetic gum is contained in said adhesive layer in a quantity of from 10 to 14% by weight.

10. The self adhesive tape of claim 1, characterized in that said tackifier resin comprises a hydrocarbon and/or colophonic and/or polyterpene resin.

11. The self adhesive tape of claim 10, characterized in that said hydrocarbon tackifier resin is contained in said adhesive layer in a quantity of from 20 to 40% by weight.

12. The self adhesive tape of claim 10, characterized in that said colophonic tackifier resin is contained in said adhesive layer in a quantity of from 5 to 11% by weight.

13. The self adhesive tape of claim 10, characterized in that said polyterpene tackifier resin is contained in said adhesive layer in a quantity of from 5 to 9% by weight.

14. The self adhesive tape of claim 1, characterized in that said adhesive layer further comprises a naphthene and/or alkylbenzene mineral oil.

15. The self adhesive tape of claim 14, characterized in that said naphthene mineral oil is contained in said adhesive layer in a quantity of from 2 to 9% by weight.

16. The self adhesive tape of claim 14, characterized in that said alkylbenzene mineral oil is contained in said adhesive layer in a quantity of from 2 to 10% by weight.

17. A process for the preparation of a self adhesive tape according to claim 1, characterized by comprising the following step of:
a) corona or flame treating said main side of said support to raise the critical surface tension from an original value lower than 35 dine/cm to a final value not lower than 38 dine/cm,
b) spreading a natural and/or modified gum anchoring layer containing of from 0.5 to 2.5% by weight of a cross linking agent selected in the class of diisocyan agents on said main side of said support,
c) spreading an adhesive substance solution or suspension in an organic solvent on said anchoring layer, said ahdesive substance comprising a mixture of at least a gum in a quantity of from 49 to 70% and at least a tackifier resin in a quantity of from 30 to 41% by weight with respect to the total dry adhesive substance weight, and
d) evaporating said organic solvent under formation of said dry adhesive substance.

**Patentansprüche**

1. Selbsthaftendes Band, umfassend eine extrudierte, zweifach gestreckte Propylenpolymerunterlage mit einer Dicke im Bereich von 30 bis 50 µm und einer Hauptseite und einer Rückseite, wobei eine Verankerungsschicht aus einem natürlichen und/oder modifizierten Gummi auf der Hauptseite der Unterlage angebracht und eine Haftschicht auf der Verankerungsschicht angebracht ist, dadurch gekennzeichnet, daß die Rückseite kein Trennmittel umfaßt und eine kritische oberflächenspannung aufweist, die gleich dem ursprünglichen Extrusionswert ist, die Verankerungsschicht ein Diisocyanat-Vernetzungsmittel in einer Menge von 0,5 bis 2,5 Gew.-% umfaßt und die Haftschicht ein haftendes Gemisch von mindestens einem Gummi in einer Menge von 49 bis 70 % und mindestens einem klebrigmachenden Harz in einer Menge von 30 bis 41 Gew.-%, bezogen auf das gesamte Gewicht der trockenen Haftsubstanz umfaßt.

2. Selbsthaftendes Band nach Anspruch 1, dadurch gekennzeichnet, daß die Verankerungsschicht das Vernetzungsmittel in einer Menge von 1 bis 1,5 Gew.-% umfaßt.

**3.** Selbsthaftendes Band nach Anspruch 1, dadurch gekennzeichnet, daß das Vernetzungsmittel Methyldiphenylisocyanat ist.

**4.** Selbsthaftendes Band nach Anspruch 1, dadurch gekennzeichnet, daß die Unterlage ein Verhältnis zwischen der Längs- und der Querreckung im Bereich von 0,6 bis 1,0 hat.

**5.** Selbsthaftendes Band nach Anspruch 1, dadurch gekennzeichnet, daß in der Unterlage das Verhältnis zwischen Längs- und Querziehspannung im Bereich von 1,2 bis 1,8 ist.

**6.** Selbsthaftendes Band nach Anspruch 1, dadurch gekennzeichnet, daß die Hauptseite einen kritischen Oberflächenspannungswert von mehr als 38 dyn/cm hat.

**7.** Selbsthaftendes Band nach Anspruch 1, dadurch gekennzeichnet, daß das Gummi natürliches und/oder Polyisopren-synthetisches Gummi umfaßt.

**8.** Selbsthaftendes Band nach Anspruch 7, dadurch gekennzeichnet, daß das natürliche Gummi eine konstante Viskosität im Bereich von 50° bis 60° Mooney aufweist und in der Haftschicht in einer Menge von 40 bis 70 Gew.-% enthalten ist.

**9.** Selbsthaftendes Band nach Anspruch 7, dadurch gekennzeichnet, daß das Polyisopren-synthetische Gummi in der Haftschicht in einer Menge von 10 bis 14 Gew.-% enthalten ist.

**10.** Selbsthaftendes Band nach Anspruch 1, dadurch gekennzeichnet, daß das klebrigmachende Harz ein Kohlenwasserstoff- und/oder ein Kolophonium- und/oder ein Polyterpenharz umfaßt.

**11.** Selbsthaftendes Band nach Anspruch 10, dadurch gekennzeichnet, daß das klebrigmachende Kohlenwasserstoffharz in der Haftschicht in einer Menge von 20 bis 40 Gew.-% enthalten ist.

**12.** Selbsthaftendes Band nach Anspruch 10, dadurch gekennzeichnet, daß das klebrigmachende Kolophoniumharz in der Haftschicht in einer Menge von 5 bis 11 Gew.-% enthalten ist.

**13.** Selbsthaftendes Band nach Anspruch 10, dadurch gekennzeichnet, daß das klebrigmachende Polyterpenharz in der Haftschicht in einer Menge von 5 bis 9 Gew.-% enthalten ist.

**14.** Selbsthaftendes Band nach Anspruch 1, dadurch gekennzeichnet, daß die Haftschicht weiterhin ein Naphthen- und/oder Alkylbenzolmineralöl enthält.

**15.** Selbsthaftendes Band nach Anspruch 14, dadurch gekennzeichnet, daß das Naphthenmineralöl in der Haftschicht in einer Menge von 2 bis, 9 Gew.-% enthalten ist.

**16.** Selbsthaftendes Band nach Anspruch 14, dadurch gekennzeichnet, daS das Alkylbenzolmineralöl in der Haftschicht in einer Menge von 2 bis 10 Gew.-% enthalten ist.

**17.** Verfahren zur Herstellung eines selbsthaftenden Bandes nach Anspruch 1, gekennzeichnet durch die folgenden Schritte:
a) Corona- oder Flammenbehandlung der Hauptseite der Unterlage zur Erhöhung der kritischen Oberflächenspannung von einem ursprünglichen Wert, der niedriger als 35 dyn/cm ist, zu einem Endwert, der nicht niedriger als 38 dyn/cm ist,
b) Verteilen einer Verankerungsschicht aus natürlichem und/oder modifiziertem Gummi, enthaltend von 0,5 bis 2,5 Gew.-% eines Vernetzungsmittels, ausgewählt aus der Klasse der Diisocyanmittel, auf der Hauptseite der Unterlage,
c) Verteilen einer Lösung oder Suspension einer haftenden Substanz in einem organischen Lösungsmittel auf der Verankerungsschicht, wobei die haftende Substanz ein Gemisch von mindestens einem Gummi in einer Menge von 49 bis 70 % und mindestens einem klebrigmachenden Harz in einer Menge von 30 bis 41 Gew.-% in bezug auf das Gesamtgewicht der trockenen Haftsubstanz umfaßt, und
d) Verdampfen des organischen Lösungsmittels unter Bildung der trockenen Haftsubstanz.

**Revendications**

1. Ruban auto-adhésif, comprenant un support, en polymère de propylène biextensible extrudé, ayant une épaisseur comprise entre 30 et 50 $\mu$m et une face principale et une face arrière, une couche d'ancrage de gomme naturelle et/ou modifiée, disposée sur la face principale du support, et une couche adhésive disposée sur la couche d'ancrage, caractérisé en ce que la face arrière ne comporte pas d'agent antiadhésif et possède une tension superficielle critique égale à la valeur d'extrusion initiale, en ce que la couche d'ancrage comprend un agent réticulant à base de diisocyanate, en une proportion comprise entre 0,5 et 2,5 % en poids, et en ce que la couche adhésive comprend un mélange adhésif d'au moins une gomme, en une proportion comprise entre 49 et 70 % en poids, et d'au moins une résine tackifiante, en une proportion comprise entre 30 et 41 % en poids, par rapport au poids total de substance adhésive sèche.

2. Ruban auto-adhésif suivant la revendication 1, caractérisé en ce que la couche d'ancrage comprend l'agent réticulant en une proportion comprise entre 1 et 1,5% en poids.

3. Ruban auto-adhésif suivant la revendication 1, caractérisé en ce que l'agent réticulant est le méthyldiphénylisocyanate.

4. Ruban auto-adhésif suivant la revendication 1, caractérisé en ce que le support possède un rapport des extensibilités longitudinale et transversale compris entre 0,6 et 1,0.

5. Ruban auto-adhésif suivant la revendication 1, caractérisé en ce que le support possède un rapport des résistances à la traction dans le sens longitudinal et dans le sens transversal qui est compris entre 1,2 et 1,8.

6. Ruban auto-adhésif suivant la revendication 1, caractérisé en ce que la face principale possède une valeur de tension superficielle critique supérieure à 38 dynes/cm.

7. Ruban auto-adhésif suivant la revendication 1, caractérisé en ce que la gomme est constituée d'une gomme naturelle et/ou d'une gomme synthétique à base de polyisoprène.

8. Ruban auto-adhésif suivant la revendication 7, caractérisé en ce que la gomme naturelle possède une viscosité constante comprise entre 50° et 60° Mooney et est contenue dans la couche adhésive en une proportion comprise entre 40 et 70 % en poids.

9. Ruban auto-adhésif suivant la revendication 7, caractérisé en ce que la gomme synthétique à base de polyisoprène est contenue dans la couche adhésive en une proportion comprise entre 10 et 14 % en poids.

10. Ruban auto-adhésif suivant la revendication 1, caractérisé en ce que la résine tackifiante est constituée d'une résine hydrocarbonée et/ou colophanique et/ou à base de polyterpène.

11. Ruban auto-adhésif suivant la revendication 10, caractérisé en ce que la résine tackifiante hydrocarbonée est contenue dans la couche adhésive en une proportion comprise entre 20 et 40 % en poids.

12. Ruban auto-adhésif suivant la revendication 10, caractérisé en ce que la résine tackifiante colophanique est contenue dans la couche adhésive en une proportion comprise entre 5 et 11 % en poids.

13. Ruban auto-adhésif suivant la revendication 10, caractérisé en ce que la résine tackifiante à base de polyterpène est contenue dans la couche adhésive en une proportion comprise entre 5 et 9 % en poids.

14. Ruban auto-adhésif suivant la revendication 1, caractérisé en ce que la couche adhésive comprend en outre une huile minérale à base de naphtène et/ou d'alcoylbenzène.

15. Ruban auto-adhésif suivant la revendication 14, caractérisé en ce que l'huile minérale à base de naphtène est contenue dans la couche adhésive en une proportion comprise entre 2 et 9 % en poids.

**16.** Ruban auto-adhésif suivant la revendication 14, caractérisé en ce que l'huile minérale à base d'alcoylbenzène est contenue dans la couche adhésive en un proportion comprise entre 2 et 10 % en poids.

**17.** Procédé de préparation d'un ruban auto-adhésif suivant la revendication 1, caractérisé en ce qu'il comprend les opérations suivantes :

a) soumettre la face principale du support à un traitement corona ou à la flamme de façon à élever la tension superficielle critique d'une valeur initiale inférieure à 35 dynes/cm à une valeur finale non inférieure à 38 dynes/cm,

b) étaler, sur la face principale du support, une couche d'ancrage de gomme naturelle et/ou modifiée, contenant une proportion d'un agent réticulant choisi dans le groupe des agents à base de diisocyanate qui est comprise entre 0,5 et 2,5 % en poids,

c) étaler sur la couche d'ancrage une solution ou suspension de substance adhésive dans un solvant organique, la substance adhésive comprenant un mélange d'au moins une gomme, en une proportion comprise entre 49 et 70 % en poids, et d'au moins une résine tackifiante, en une proportion comprise entre 30 et 41 % en poids, par rapport au poids total de substance adhésive sèche, et

d) faire s'évaporer le solvant organique de façon à former ladite substance adhésive sèche.